# EUROPÄISCHE PATENTSCHRIFT

(11) **EP 2 631 179 B1**
(45) Veröffentlichungstag und Bekanntmachung des Hinweises auf die Patenterteilung: **15.04.2015**
(21) Anmeldenummer: 13156333.0
(22) Anmeldetag: 22.02.2013
(51) Int. Cl.: B64C 27/54

(54) **Rotorblatt variabler Geometrie**
Rotor blade with variable geometry
Pale de rotor à géométrie variable

(30) Priorität: 24.02.2012 DE 102012101514
(43) Veröffentlichungstag der Anmeldung: 28.08.2013
(73) Patentinhaber: Deutsches Zentrum für Luft- und Raumfahrt e.V., 51147 Köln (DE)
(72) Erfinder: Riemenschneider, Johannes, 38106 Braunschweig (DE)
(74) Vertreter: REHBERG HÜPPE + PARTNER

(56) Entgegenhaltungen:
- EP-A1- 1 995 455
- US-A- 2 957 526
- US-A- 4 178 130
- US-A1- 2008 292 461

## Beschreibung

### TECHNISCHES GEBIET DER ERFINDUNG

Die Erfindung bezieht sich auf ein Rotorblatt, insbesondere für einen Horizontalrotor eines Hubschraubers, das die Merkmale des Oberbegriffs des unabhängigen Patentanspruchs 1 aufweist, sowie auf einen Hubschrauber mit einem Horizontalrotor, der ein solches Rotorblatt aufweist.

Die Anströmverhältnisse eines Rotorblatts eines Horizontalrotors eines Hubschraubers variieren sehr stark zwischen dem Schwebeflug des Hubschraubers, in dem der Horizontalrotor allein durch Rotation den benötigten Auftrieb erzeugen muss, und dem Vorwärtsflug des Hubschraubers, in dem eine Anströmung der Rotorblätter des Horizontalrotors auch durch seine Relativbewegung gegenüber der Umgebungsluft erfolgt. Zum Erreichen hoher Fluggeschwindigkeiten ist im Vorwärtsflug zudem ein möglichst geringer Strömungswiderstand des Horizontalrotors von Interesse. Hieraus resultieren sich widersprechende Anforderungen an die Geometrie, wie beispielsweise die Grundfläche, die Vorverwindung und die Pfeilung des Rotorblatts oder die Steigung seiner Blattspitze.

### STAND DER TECHNIK

Es sind bereits verschiedene Versuche unternommen worden, ein formvariables Rotorblatt für einen Horizontalrotor eines Hubschraubers bereitzustellen, bei dem die Blattgeometrie an die unterschiedlichen Betriebszustände des Hubschraubers angepasst werden kann. Diese Versuche scheiterten jedoch bislang an geeigneten Aktuatoren und Kinematiken, die auch unter den erheblichen Zentrifugalkräften, welche auf Rotorblätter eines Horizontalrotors eines Hubschraubers einwirken, sicher funktionsfähig sind.

Verfügbar sind bislang ausfahrbare Hinterkanten von Rotorblättern zur Erhöhung der Blattgrundfläche und Rotorblätter, die teleskopierbar sind und sich unter der auf sie einwirkenden Zentrifugalkraft gegen eine Feder oder durch externe Aktuatoren auseinander- bzw. wieder zusammenfahren.

Aus der US 2008/0292461 A1 ist ein Rotorblatt für eine Windkraftanlage mit einem Festkörpergelenk und einem pneumatischen Aktuator bekannt, um einen beweglichen Teil einer Klappe an der Hinterkante des Rotorblatts gegenüber einer Hauptebene des Rotorblatts auszulenken.

Aus der DE 10 2009 012 801 B4 ist ein Rotorblatt für einen Helikopter mit einer Aktuatoranordnung in einem Blattspitzenbereich bekannt. Durch eine Längenänderung der Aktuatoranordnung in Längserstreckungsrichtung des Rotorblatts wird die Blattspitze mit der Aktuatoranordnung um eine in der Hauptebene des Rotorblatts und senkrecht zu der Haupterstreckung des Rotorblatts verlaufende Achse abgewinkelt.

Aus der DE 103 17 258 A1 ist ein Verstellmechanismus für einen Verstellbereich einer formvariablen Strömungsfläche bekannt. Dabei sind mehrere nebeneinander angeordnete und zueinander verschwenkbare Wirbelkästen mit Querversteifungselementen und Längsversteifungselementen vorgesehen, die mit einem Gelenk gelenkig miteinander verbunden sind, so dass sie relativ zueinander verschwenkbar sind. Zwischen jeweils benachbarten Längsversteifungselementen ist jeweils ein erster Antriebsschlauchabschnitt und ein zweiter Antriebsschlauchabschnitt angeordnet, die jeweils in Verbindung mit einer Pumpe zur Bereitstellung eines vorbestimmten Drucks über ein Druckmedium stehen, so dass die Achse des Gelenks zwischen den Antriebsschlauchabschnitten verläuft. Durch komplementäre Volumenänderung in dem ersten und zweiten Antriebsschlauchabschnitt werden benachbarte Wirbelkästen um die Gelenkachse verschwenkt. Auf diese Weise können Klappen an den Vorderkanten und Hinterkanten von Tragflügeln sowie Flügelspitzen ausgelenkt werden.

Aus der US 6,116,857 A ist ein Rotorblatt mit reduzierter Lärmentwicklung bekannt, das in seiner Hauptebene von der Rotorachse aus gesehen zunächst einen Knick nach vorne und dann vor seiner gepfeilten Blattspitze einen Knick nach hinten aufweist. Dabei verläuft die Blattspitze auch gegenüber dem Anfangsbereich des Rotorblatts nach hinten geneigt. Diese Ausgestaltung des Rotorblatts weist Vorteile in Bezug auf die Lärmentwicklung in Lande-, Start- und Schwebeflug auf. Es handelt sich jedoch nicht um eine für den Vorwärtsflug optimierte Konfiguration.

Aus der US 3,645,173 A, der GB 1 331 756 A und weiteren in der Beschreibungseinleitung der EP 1 225 119 B1 erwähnten Druckschriften sind so genannte Schlauchaktuatoren bekannt, die sich bei Beaufschlagung ihres Innenraums mit einem Hydraulikmedium im Durchmesser erweitern und sich dadurch zwischen ihren Anbindungspunkten verkürzen. Derartige Schlauchaktuatoren weisen keine Teile auf, die durch Abgleiten aneinander gegeneinander beweglich sind.

Aus der DE 10 2010 029 088 A1 ist eine Schnittstelle bekannt, die zwei durch ein Gelenk miteinander verbundene Anschlussbereiche aufweist, wobei das Gelenk in eine Vielzahl von Teilchen eingebettet ist, die beispielsweise durch eine elastische Umhüllung so gegeneinander beaufschlagt werden, dass sie das Gelenk blockieren. Diese Blockade kann zum Beispiel durch pneumatische Beaufschlagung der Umhüllung von innen vorübergehend aufgehoben werden.

### AUFGABE DER ERFINDUNG

Der Erfindung liegt die Aufgabe zugrunde, ein Rotorblatt aufzuzeigen, das formvariabel ist, um es an die unterschiedlichen Flugzustände eines Hubschraubers und die dabei auftretenden unterschiedlichen Anströmbedingungen anzupassen, ohne dass ungewollte Verformungen und/oder Funktionsstörungen durch auftretende Zentrifugalkräfte verursacht werden.

### LÖSUNG

Die Aufgabe der Erfindung wird durch ein Rotorblatt mit den Merkmalen des unabhängigen Patentanspruchs 1 gelöst. Die abhängigen Patentansprüche 2 bis 12 betreffen bevorzugte Ausführungsformen des erfindungsgemäßen Rotorblatts. Patentanspruch 13 auf einen Hubschrauber mit einem Horizontalrotor gerichtet, der mindestens ein erfindungsgemäßes Rotorblatt aufweist. Die abhängigen Patentansprüche 14 und 15 betreffen bevorzugte Ausführungsformen des erfindungsgemäßen Hubschraubers.

### BESCHREIBUNG DER ERFINDUNG

Bei einem erfindungsgemäßen Rotorblatt mit mindestens einem Gelenk und mindestens einem Aktuator, um eine Verformung des Rotorblatts um das Gelenk hervorzurufen, ist das Gelenk ein Festkörpergelenk und der Aktuator ein pneumatischer Aktuator, und der Aktuator ruft eine Verformung des Rotorblatts um eine senkrecht zur Hauptebene des Rotorblatts verlaufende Achse hervor.

Durch Ausbildung des Gelenks als Festkörpergelenk wird ein Festsetzen der gegeneinander beweglichen Teile des Gelenks unter Einwirkung der auf das Rotorblatt einwirkenden Zentrifugalkräfte vermieden. Ein Festkörpergelenk weist ausschließlich durch Deformation seiner Struktur gegeneinander bewegliche Teile auf. Es erfolgt kein Abgleiten oder Abrollen von Teilen aneinander, das durch auftretende Zentrifugalkräfte blockiert werden könnte.

Die Ausbildung des Aktuators als pneumatischer Aktuator ermöglicht es ebenfalls, auf Teile zu verzichten, die aneinander abgleiten oder aneinander abrollen. Stattdessen weist der pneumatische Aktuator vorzugsweise ausschließlich durch Deformation gegeneinander bewegliche Teile auf. Diese Bewegung der Teile wird durch Ansteuern des Aktuators mit Druckluft bewirkt. Entsprechende Druckluftleitungen können innerhalb des Rotorblatts vorgesehen werden, ohne dessen Masse signifikant zu erhöhen.

Konkret kann der pneumatische Aktuator des erfindungsgemäßen Rotorblatts nach einem Prinzip aufgebaut sein, das unter dem Stichwort "Schlauchaktuator" bekannt ist und bei dem der pneumatische Aktuator eine Annäherung von zwei Punkten verursacht. Alternativ kann der pneumatische Aktuator bei Ansteuerung einen Abstand zwischen zwei Punkten vergößern. Ein entsprechend doppelt wirkender Aktuator ist ebenfalls einsetzbar. Die jeweilige Rückführung kann aber auch durch eine elastische Rückstellkraft bewirkt werden.

Durch Verformung des Rotorblatts um eine durch das Festkörpergelenk definierte, senkrecht zur Hauptebene des Rotorblatts verlaufende Achse kann dem Rotorblatt eine Konfiguration für den Start-, Lande- oder Schwebeflug verliehen werden. Eine Konfiguration fürden Start-, Lande- oder Schwebeflug ist aus der US 6,116,857 bekannt ist, ohne dass dem Rotorblatt diese Konfiguration auch während des Vorwärtsflugs zu eigen sein muss.

Wenn ein erfindungsgemäßes Rotorblatt ein Festkörpergelenk mit zugehörigem Aktuator aufweist, verläuft die durch dieses Festkörpergelenk definierte Achse in einem Abstand von mindestens 10 % der Spannweite des Rotorblatts zu einer Blattspitze des Rotorblatts. Dabei ist die Spannweite des Rotorblatts als der Abstand zwischen einer Rotorachse, um die das Rotorblatt umläuft, und seiner Blattspitze zu verstehen.

Bei den meisten Ausführungsformen des erfindungsgemäßen Rotorblatts auch mit nur einem Festkörpergelenk liegt die von diesem definierte Achse in einem Abstand von mindestens 20 % der Spannweite des Rotorblatts. Häufig liegt dieser Abstand bei 1/3 oder gar der Hälfte der Spannweite des Rotorblatts. In diesen Fällen ist es besonders bevorzugt, wenn ein weiteres Gelenk und ein weiterer Aktuator vorgesehen sind, um eine Vorformung des Rotorblatts um das weitere Gelenk hervorzurufen, wobei auch das weiterer Gelenk ein Festkörpergelenk ist wobei der weitere Aktuator ein pneumatischer Aktuator ist. Auch der weitere Aktuator ruft eine Verformung des Rotorblatts um eine weitere quer zu der Hauptebene des Rotorblatts verlaufende Achse hervor, die zwischen der von dem ersten Festkörpergelenk definierten Achse und der Blattspitze des Rotorblatts verläuft.

Die von dem weiteren Festkörpergelenk definierte weitere Achse verläuft vorzugsweise in Abständen zu der ersten Achse und der Blattspitze des Rotorblatts von mindestens einem Viertel des Abstands zwischen der ersten Achse und der Blattspitze. Hierdurch lassen sich für den Start-, Lande- oder Schwebeflug die aus der US 6,116,857 grundsätzlich bekannten vorteilhaften Konfigurationen gezielt einstellen.

Das Festkörpergelenk kann, um bei ausreichender Verformbarkeit eine hohe Festigkeit zu realisieren, einen Faserverbundaufbau aufweisen. Dabei können zum Beispiel zerstörungsfrei biegbare Verstärkungsfaser quer zu der gewünschten Achse der Verformung des Festkörpergelenks verlaufen.

Das erfindungsgemäße Rotorblatt ist weniger dazu gedacht, mit dem Aktuator eine periodische Verformung des Rotorblatts vorzusehen, die zum Beispiel einmal je Umlauf des Rotorblatts um eine Rotorachse erfolgt. Vielmehr geht es darum, die Konfiguration des Rotorblatts an unterschiedliche Betriebsbedingungen des jeweiligen Rotors, zum Beispiel unterschiedliche Betriebsbedingungen des zugehörigen Hubschraubers anzupassen. Entsprechend werden mit dem Aktuator im Wesentlichen statische oder zumindest quasi statische Verformungen des Rotorblatts hervorgerufen.

Eine mit dem Aktuator hervorgerufene Verformung muss nicht mit dem Aktuator selbst konserviert werden, indem dieser beispielsweise dauerhaft mit Druckluft beaufschlagt wird. Vielmehr kann eine Verriegelungsvorrichtung zur Verriegelung des Rotorblatts in seiner verformten Stellung vorgesehen sein.

Bei der Verriegelungsvorrichtung kann es sich zum Beispiel um eine solche handeln, die pneumatisch betätigbar ist. Sie kann dabei auf dem Prinzip basieren, dass aus der DE 10 2010 029 088 A1 bekannt ist. So kann durch zunächst Beaufschlagen der Verriegelungseinrichtung mit Druckluft das Festkörpergelenk entriegelt werden, um dann das Rotorblatt durch Beaufschlagen des Aktuators mit Druckluft gezielt um das Festkörpergelenk herum zu verformen. Anschließend kann zunächst die Druckbeaufschlagung der Verriegelungsvorrichtung zurückgenommen werden, um das Festkörpergelenk in der verformten Stellung des Rotorblatts zu fixieren, bevor dann auch der Aktuator von Druckluft entlastet wird.

Ein erfindungsgemäßer Hubschrauber weist mindestens ein erfindungsgemäßes Rotorblatt auf. Es versteh sich, dass vorzugsweise alle Rotorblätter seines Horizontalrotors aus erfindungsgemäßen Rotorblättern bestehen.

Die zum Betreiben des pneumatischen Aktuators und ggf. einer pneumatischen Verriegelungsvorrichtung benötigte Druckluft kann von einer nicht rotierenden Einrichtung des Hubschraubers über eine pneumatische Drehdurchführung oder über pneumatische Schleifringe zugeführt werden, die dem Fachmann zur Verfügung stehen. Die Schaltung der Druckluft kann ebenfalls durch nicht rotierende Ventile erfolgen. Auch ist es möglich, die Druckluft durch mit dem Rotorblatt umlaufende Ventile zu schalten, die über eine nicht rotierende Schalteinrichtung mechanisch betätigt werden. Hierfür kann zum Beispiel eine zusätzliche Steuerscheibe im Bereich der Anbindung der Rotorblätter an die Rotorwelle auf die Ventile einwirken.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.
- **Fig. 1**: illustriert ein Rotorblatt mit einer auslenkbaren Blattspitze.
- **Fig. 2**: illustriert ein erfindungsgemäßes Rotorblatt mit einer innerhalb seiner Blattebene veränderbaren Konfiguration; und
- **Fig. 3**: illustriert eine Anordnung eines pneumatischen Aktuators in Bezug auf ein Festkörpergelenk in einem Holm eines Rotorblatts.

### FIGURENBESCHREIBUNG

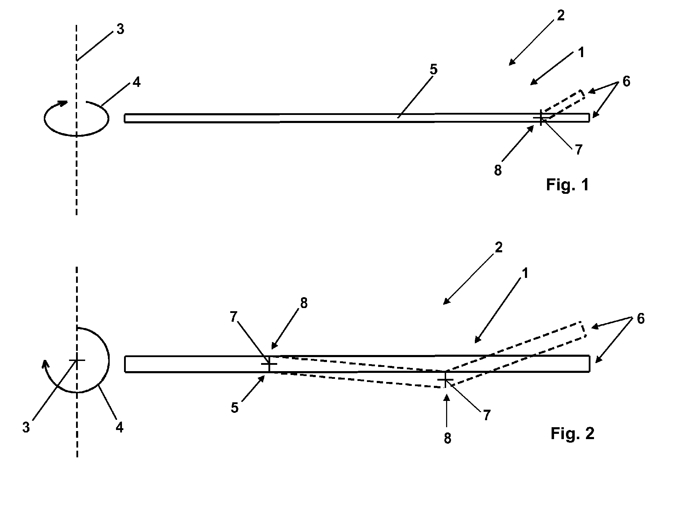

Das in **Fig. 1** dargestellte Rotorblatt 1 ist Teil eines nicht weiter dargestellten Rotors 2, der um eine Rotorachse 3 in Richtung eines Drehpfeils 4 umläuft. In Fig. 1 blickt der Betrachter auf die Vorderkante 5 des Rotorblatts 1. Eine Blattspitze 6 des Rotorblatts 1 ist um eine Achse 7, die senkrecht zu der Haupterstreckungsrichtung des Rotorblatts 1 verläuft, abwinkelbar. Dies erlaubt es, die Blattspitze 6 nach Art eines Winglets auszurichten, was mit gestrichelter Linie angedeutet ist. Realisiert ist diese Verformbarkeit des Rotorblatts 1 durch ein im Bereich der Achse 7 ausgebildetes Festkörpergelenk 8 und einen hier nicht im Einzelnen dargestellten pneumatischen Aktuator.

**Fig. 2** zeigt ein erfindungsgemäßes Rotorblatt 1, das in der Hauptebene des Rotors 2, in der es um die Rotorachse 3 umläuft oder genauer in seiner eigenen Hauptebene verformbar ist, um eine Konfiguration anzunehmen, wie sie grundsätzlich aus der US 6,116,857 als für den Lande-, Start- und Schwebeflug vorteilhaft bekannt ist. Hierzu weist das Rotorblatt 1 zwei Festkörpergelenke 8 auf, die seine Verformung unter Einwirkung von pneumatischen Aktuatoren um zwei Achsen 7 ermöglichen. Die Achsen verlaufen quer zu der Hauptebene des Rotorblatts 1 und sind untereinander beabstandet, hier um etwa ein Drittel der Spannweite des Rotorblatts 1. Die damit erreichte, durch gestrichelte Linien wiedergegebene Konfiguration zeichnet sich dadurch aus, dass die Vorderkante 5 des Rotorblatts 1 zunächst vor der Hälfte der Spannweite des Rotorblatts 1 nach vorne und dann nach der Hälfte der Spannweite des Rotorblatts 1 vor der Blattspitze 6 nach hinten abknickt.

Beide Festkörpergelenk 8 weisen vorzugsweise einen Faserverbundaufbau auf und sind z. B. gemäß der Lehre der DE 10 2010 029 088 A1 pneumatisch aus einer blockierten Stellung freigebbar, um sie anschließend mit pneumatischen Aktuatoren, die nach Art eines Schlauchaktuators aufgebaut sein können, zu deformieren. Danach können die Festkörpergelenke 8 durch Rücknahme ihrer pneumatischen Freigabe wieder blockiert werden. Damit wird die mit den Aktuatoren hervorgerufene Konfiguration zum Beispiel für den Start-, Lande- oder Schwebeflug konserviert. Vor dem Vorwärtsflug kann sie wieder aufgehoben werden.

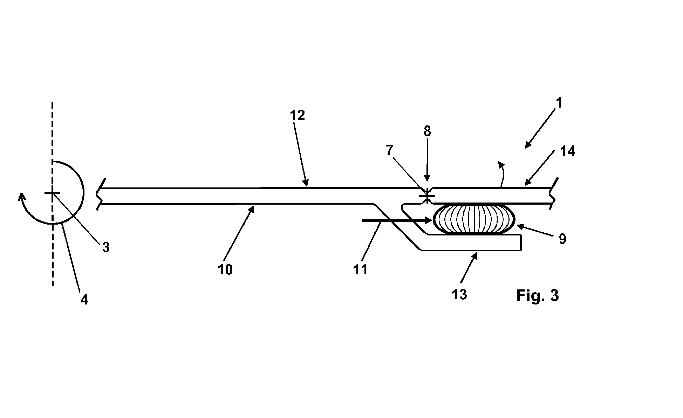

**Fig. 3** skizziert eine mögliche Anordnung eines pneumatischen Aktuators 9 gegenüber einem Holm 10 eines hier nicht weiter dargestellten um die Rotorachse 3 umlaufenden Rotorblatts 1. Der Aktuator 9 ist als zunächst abgeflachtes Druckkissen mit einer faserverstärkten Hülle ausgebildet, das mit Druckluft 11 beaufschlagbar ist und in der Folge versucht, eine sphärische Gestalt anzunehmen. Diese Gestaltänderung kann der Aktuator 9, der zwischen einem starr mit einem proximalen, das heißt der Rotorachse 3 näheren Abschnitt 12 des Holms 10 verbundenen Ausleger 13 und einem distalen Abschnitt 14 des Holms 10 angeordnet ist, nur unter Verschwenken des distalen Abschnitts 14 um das Festkörpergelenk 8 vollziehen. Dadurch wird das Rotorblatt verformt. Wenn die Beaufschlagung mit der Druckluft 11 wieder zurückgenommen wird, kehrt der distale Abschnitt 14 durch elastische Rückstellkräfte des Holms 10, die im Bereich des Festkörpergelenks 8 auftreten, in seine Ausgangsstellung zurück.

### BEZUGSZEICHENLISTE

- 1: Rotorblatt
- 2: Rotor
- 3: Rotorachse
- 4: Drehpfeil
- 5: Vorderkante
- 6: Blattspitze
- 7: Achse
- 8: Festkörpergelenk
- 9: Aktuator
- 10: Holm
- 11: Druckluft
- 12: proximaler Abschnitt
- 13: Ausleger
- 14: distaler Abschnitt

## Patentansprüche

1. Rotorblatt (1) mit mindestens einem Gelenk und mit mindestens einem Aktuator, um eine Verformung des Rotorblatts (1) um das Gelenk hervorzurufen, wobei das Gelenk ein Festkörpergelenk (8) ist und wobei der Aktuator ein pneumatischer Aktuator ist, **dadurch gekennzeichnet, dass** die vom Aktuator hervorgerufene Verformung des Rotorblatts (1) um eine senkrecht zur Hauptebene des Rotorblatts (1) verlaufende Achse erfolgt.

2. Rotorblatt (1) nach Anspruch 1, **dadurch gekennzeichnet, dass** der pneumatische Aktuator ausschließlich durch Deformation gegeneinander bewegliche Teile aufweist.

3. Rotorblatt (1) nach einem der vorhergehenden Ansprüche, **dadurch gekennzeichnet, dass** die Achse (7) einen Abstand von mindestens 10 % der Spannweite des Rotorblatts (1) zu einer Blattspitze (6) des Rotorblatts (1) aufweist.

4. Rotorblatt (1) nach einem der vorhergehenden Ansprüche, **dadurch gekennzeichnet, dass** die Achse (7) einen Abstand von mindestens 20 % der Spannweite des Rotorblatts (1) zu einer Blattspitze (6) des Rotorblatts (1) aufweist.

5. Rotorblatt (1) nach einem der vorhergehenden Ansprüche, **dadurch gekennzeichnet, dass** die Achse (7) einen Abstand von mindestens einem Drittel der Spannweite des Rotorblatts (1) zu einer Blattspitze (6) des Rotorblatts (1) aufweist.

6. Rotorblatt (1) nach einem der vorhergehenden Ansprüche, **dadurch gekennzeichnet, dass** die Achse (7) einen Abstand von mindestens der Hälfte der Spannweite des Rotorblatts (1) zu einer Blattspitze (6) des Rotorblatts (1) aufweist.

7. Rotorblatt (1) nach Anspruch 5 oder 6, **dadurch gekennzeichnet, dass** ein weiteres Gelenk und ein weitere Aktuator vorgesehen sind, um eine Verformung des Rotorblatts (1) um das weitere Gelenk hervorzurufen, wobei das weitere Gelenk ein Festkörpergelenk (8) ist und wobei der weitere Aktuator ein pneumatischer Aktuator ist, und dass der weitere Aktuator eine Verformung des Rotorblatts (1) um eine weitere senkrecht zur Hauptebene des Rotorblatts (1) verlaufende Achse (7) hervorruft, die zwischen der Achse (7) und der Blattspitze (6) des Rotorblatts (1) verläuft.

8. Rotorblatt (1) nach Anspruch 7, **dadurch gekennzeichnet, dass** Abstände der weiteren Achse (7) und der Achse (7) einerseits und der weiteren Achse (7) und der Blattspitze (6) andererseits mindestens ein Viertel des Abstands zwischen der Achse (7) und der Blattspitze (6) betragen.

9. Rotorblatt (1) nach einem der vorhergehenden Ansprüche, **dadurch gekennzeichnet, dass** das Festkörpergelenk (8) einen Faserverbundaufbau aufweist.

10. Rotorblatt (1) nach einem der vorhergehenden Ansprüche, **dadurch gekennzeichnet, dass** der Aktuator eine statische Verformung des Rotorblatts (1) hervorruft.

11. Rotorblatt (1) nach einem der vorhergehenden Ansprüche, **dadurch gekennzeichnet, dass** eine Verriegelungsvorrichtung zur Verriegelung des Rotorblatts (1) in seiner verformten Stellung vorgesehen ist.

12. Rotorblatt (1) nach Anspruch 10, **dadurch gekennzeichnet, dass** die Verriegelungsvorrichtung pneumatisch betätigbar ist.

13. Hubschrauber mit einem Horizontalrotor, der mindestens ein Rotorblatt (1) nach einem der vorhergehenden Ansprüche aufweist.

14. Hubschrauber nach Anspruch 13, **dadurch gekennzeichnet, dass** eine nicht rotierende Einrichtung des Hubschraubers dem pneumatischen Aktuator Druckluft zuführt.

15. Hubschrauber nach Anspruch 14, **dadurch gekennzeichnet, dass** die Druckluft durch ein mit dem Rotorblatt (1) umlaufendes Ventil geschaltet wird, das über eine nicht rotierende Schalteinrichtung mechanisch betätigt wird.

## Claims

1. Rotor blade (1) comprising at least one joint and at least one actuator to cause a deformation of the rotor blade (1) about the joint, wherein the joint is a flexure joint (8) and wherein the actuator is a pneumatic actuator, **characterised in that** the deformation of the rotor blade (1) caused by the actuator is effected about an axis running perpendicular to the main plane of the rotor blade (1).

2. Rotor blade (1) of claim 1, **characterised in that** the pneumatic actuator comprises parts which are movable with regard to each other due to deformation only.

3. Rotor blade (1) of any of the preceding claims, **characterised in that** the axis (7) is at a distance to a blade tip (6) of the rotor blade (1) of at least 10 % of the span length of the rotor blade (1).

4. Rotor blade (1) of any of the preceding claims, **characterised in that** the axis (7) is at a distance to a blade tip (6) of the rotor blade (1) of at least 20 % of the span length of the rotor blade (1).

5. Rotor blade (1) of any of the preceding claims, **characterised in that** the axis (7) is at a distance to a blade tip (6) of the rotor blade (1) of at least a third of the span length of the rotor blade (1).

6. Rotor blade (1) of any of the preceding claims, **characterised in that** the axis (7) is at a distance to a blade tip (6) of the rotor blade (1) of at least half the span length of the rotor blade (1).

7. Rotor blade (1) of claim 5 or 6, **characterised in that** a further joint and a further actuator are provided to cause a deformation of the rotor blade (1) about the further joint, wherein the further joint is a flexure joint (8) and wherein the further actuator is a pneumatic actuator, and that the further actuator causes a deformation of the rotor blade (1) about a further axis (7) running perpendicular to the main plane of the rotor blade (1), which is located between the axis (7) and the blade tip (6) of the rotor blade (1).

8. Rotor blade (1) of claim 7, **characterised in that** distances between the further axis (7) and the axis (7) on the one hand and between the further axis (7) and the blade tip (6) on the other hand are at least a quarter of the distance between the axis (7) and the blade tip (6).

9. Rotor blade (1) of any of the preceding claims, **characterised in that** the flexure joint (8) comprises a fibre compound construction.

10. Rotor blade (1) of any of the preceding claims, **characterised in that** the actuator causes a static deformation of the rotor blade (1).

11. Rotor blade (1) of any of the preceding claims, **characterised in that** a locking device for locking the rotor blade (1) in its deformed state is provided.

12. Rotor blade (1) of claim 10, **characterised in that** the locking device is operated pneumatically.

13. Helicopter comprising a horizontal rotor, which includes at least one rotor blade (1) of any of the preceding claims.

14. Helicopter of claim 13, **characterised in that** a non-rotating device of the helicopter supplies pressured air to the pneumatic actuator.

15. Helicopter of claim 14, **characterised in that** the pressured air is switched via a valve rotating with the rotor blade (1), which is operated by a non-rotating switching device.

## Revendications

1. Pale de rotor (1) ayant au moins une articulation et ayant au moins un actionneur afin de provoquer une déformation de la pale de rotor (1) autour de l'articulation, étant entendu que l'articulation est une articulation à corps solide (8) et étant entendu que l'actionneur est un actionneur pneumatique, **caractérisée en ce que** la déformation de la pale de rotor (1) provoquée par l'actionneur s'effectue autour d'un axe s'étendant perpendiculairement au plan principal de la pale de rotor (1).

2. Pale de rotor (1) selon la revendication 1, **caractérisée en ce que** l'actionneur pneumatique présente des parties mobiles l'une par rapport à l'autre uniquement par déformation.

3. Pale de rotor (1) selon l'une des revendications précédentes, **caractérisée en ce que** l'axe (7) présente une distance d'au moins 10 % de l'envergure de la pale de rotor (1) par rapport à une extrémité de pale (6) de la pale de rotor (1).

4. Pale de rotor (1) selon l'une des revendications précédentes, **caractérisée en ce que** l'axe (7) présente une distance d'au moins 20 % de l'envergure de la pale de rotor (1) par rapport à une extrémité de pale (6) de la pale de rotor (1).

5. Pale de rotor (1) selon l'une des revendications précédentes, **caractérisée en ce que** l'axe (7) présente une distance d'au moins un tiers de l'envergure de la pale de rotor (1) par rapport à une extrémité de pale (6) de la pale de rotor (1).

6. Pale de rotor (1) selon l'une des revendications précédentes, **caractérisée en ce que** l'axe (7) présente une distance d'au moins la moitié de l'envergure de la pale de rotor (1) par rapport à une extrémité de pale (6) de la pale de rotor (1).

7. Pale de rotor (1) selon la revendication 5 ou 6, **caractérisée en ce qu'**une articulation supplémentaire et un actionneur supplémentaire sont prévus afin de provoquer une déformation de la pale de rotor (1) autour de l'articulation supplémentaire, étant entendu que l'articulation supplémentaire est une articulation à corps solide (8) et étant entendu que l'actionneur supplémentaire est un actionneur pneumatique, et **en ce que** l'actionneur supplémentaire provoque une déformation de la pale de rotor (1) autour d'un axe supplémentaire (7) s'étendant perpendiculairement au plan principal de la pale de rotor (1) qui s'étend entre l'axe (7) et l'extrémité de pale (6) de la pale de rotor (1).

8. Pale de rotor (1) selon la revendication 7, **caractérisé en ce que** les distances entre, d'une part, l'axe supplémentaire (7) et l'axe (7), et d'autre part, l'axe supplémentaire (7) et l'extrémité de pale (6) s'élèvent à au moins un quart de la distance entre l'axe (7) et l'extrémité de pale (6).

9. Pale de rotor (1) selon l'une des revendications précédentes, **caractérisée en ce que** l'articulation à corps solide (8) présente une structure en matériau composite renforcé de fibres.

10. Pale de rotor (1) selon l'une des revendications précédentes, **caractérisée en ce que** l'actionneur provoque une déformation statique de la pale de rotor (1).

11. Pale de rotor (1) selon l'une des revendications précédentes, **caractérisée en ce qu'**il est prévu un dispositif de verrouillage pour verrouiller la pale de rotor (1) dans sa position déformée.

12. Pale de rotor (1) selon la revendication 10, **caractérisée en ce que** le dispositif de verrouillage peut être actionné de façon pneumatique.

13. Hélicoptère comprenant un rotor horizontal, qui présente au moins une pale de rotor (1) selon l'une des revendications précédentes.

14. Hélicoptère selon la revendication 13, **caractérisé en ce qu'**un dispositif non rotatif de l'hélicoptère amène de l'air comprimé à l'actionneur pneumatique.

15. Hélicoptère selon la revendication 14, **caractérisé en ce que** l'air comprimé est commuté au moyen d'une vanne d'un pourtour identique à la pale de rotor (1) qui est actionnée mécaniquement par le biais d'un dispositif de commutation non rotatif.
